# EUROPÄISCHE PATENTSCHRIFT

(11) **EP 1 329 647 B1**
(45) Veröffentlichungstag und Bekanntmachung des Hinweises auf die Patenterteilung: **02.11.2006**
(21) Anmeldenummer: 03000834.6
(22) Anmeldetag: 15.01.2003
(51) Int. Cl.: F16H 3/08

(54) **Lastschaltgetriebe mit hydrodynamischem und mechanischem Leistungspfad**
Power shift transmission with hydrodynamic and mechanical paths
Transmission à changement de vitesse sous charge avec trajet mécanique et hydrodynamique

(30) Priorität: 18.01.2002 DE 10201837
(43) Veröffentlichungstag der Anmeldung: 23.07.2003
(73) Patentinhaber: ZF FRIEDRICHSHAFEN AG, 88038 Friedrichshafen (DE)
(72) Erfinder: Huber, Tilo, 94034 Passau (DE)

(56) Entgegenhaltungen:
- DE-A1- 2 904 062
- DE-B- 1 053 326
- US-A- 3 350 951
- US-A- 5 743 142
- US-A- 5 787 756
- US-A- 5 819 587
- US-A1- 2002 083 785
- US-B1- 6 186 029

## Beschreibung

Die vorliegende Erfindung bezieht sich auf ein mehrgängiges Lastschaltgetriebe mit hydrodynamischem und mechanischem Leistungspfad, insbesondere ein solches mehrgängiges Lastschaltgetriebe als Wendegetriebe für Baumaschinen, gemäß dem Oberbegriff des Patentanspruchs 1. Aus der DE-A1-2904062 ist ein Lastschaltgetriebe mit dem Merkmalen des Oberbegriffes des Anspruches 1 bekannt.

Unter Last schaltbare Wendegetriebe werden in vielen verschiedenen Fahrzeugen der Baumaschinenbranche verwendet. Typische Anwendungsbeispiele sind der Einsatz in Gabelstaplern, Bagger- und Radladern, Telescopic-Handlern und auch in Kranfahrzeugen. Die Vielfalt der Fahrzeuge in diesem Bereich verlangt ein hohes Maß an Anpassungsfähigkeit des eingesetzten Getriebes, da die Ein- und Einsatzbaubedingungen in den verschiedenen Fahrzeugen höchst unterschiedlich ausfallen können.

Beispielsweise kann der zur Verfügung stehende Einbauraum extrem klein ausfallen. Ferner können unterschiedliche Achsabstände zwischen der Getriebeantriebswelle und der Getriebeabtriebswelle auftreten. Je nach Fahrzeugtyp ist demnach ein bestimmter Achsversatz zwischen der Ein- und Ausgangswelle des Getriebes erforderlich. Weiter wird in den meisten Einsatzbereichen mindestens ein Nebenantrieb benötigt z. B. für die Hydraulik der Arbeitsmaschine. Die Aufgaben, die ein Wendegetriebe zu erfüllen hat, sind demnach bedingt durch die Bauart des Fahrzeugs sehr unterschiedlich. Diese Anforderungen müssen innerhalb der axialen Baulänge und Breite des Getriebes erfüllt werden. Eine zukünftige Anforderung an Lastschaltgetrieben mit hydrodynamischem Leistungspfad ist auch ein verbesserter Wirkungsgrad, vor allem bei Anwendungen mit hohen Fahranteilen. Ein zusätzlicher mechanischer Leistungspfad kann dafür in vielen Anwendungen eine Alternative zu einer oft aufwendigen Wandlerdurchkupplung sein.

Aus der US 6,186,029 B1 ist ein lastschaltbares Wendegetriebe bekannt, mit einem ersten Getriebeteil mit ersten und zweiten Antriebswellen und einer Abtriebswelle. Die erste Antriebs-welle kann verbunden werden mit einem Pumenabschnitt eines Drehmomentwandlers, wohingegen die zweite Antriebswelle wahlweise verbunden werden kann mit einem Turbinenabschnitt des Drehmomentwandlers, so dass mit schaltbaren Kupplungen getrennte Antriebswege über den Drehmomentwandler oder über einen direkten Durchtrieb von einem Motor zum Getriebeausgang gewählt werden können. Der Antriebsweg über den Turbinenabschnitt des Drehmomentwandlers ist als hydrodynamischer Leistungspfad und der Antriebsweg über den direkten Durchtrieb als mechanischer Leistungspfad bezeichnet. Ein zweiter Getriebeteil weist Kupplungen und Getriebelemente für unterschiedliche Vorwärtsund Rückwärtsgänge des lastschaltbaren Wendegetriebes auf. Dieses Getriebe kann auch als Retarder betrieben werden. Durch die Anordnung von Schaltkupplungen, Festrädern und Losrädern auf mehreren Vorgelegewellen können lange und kurze Achsabstände realisiert werden, wobei je nach gewünschtem Gang unterschiedliche Kombinationen von Vorgelegewellen an der Kraftübertragung beteiligt sind. Bei diesem Getriebe werden demnach zur Realisierung verschiedener Achsabstände sich voneinander unterscheidende Wellenanordnungen vorgesehen. Nachteilig bei diesem Getriebe ist jedoch die eingeschränkte Flexibilität der Gangübersetzungen und der Gesamtübersetzung, wobei die Gesamtübersetzung insgesamt gering ist. Zudem läßt die Flexibilität der Achsabstände, der Anordnung von An- und Abtrieb und des PTO zu wünschen übrig.

Aufgabe der vorliegenden Erfindung ist es, mit wenig Aufwand ein effizientes mehrgängiges Lastschaltgetriebe mit hydrodynamischem und mechanischem Leistungspfad zu schaffen, das an verschiedene Einbausituationen angepaßt werden kann, dessen Anordnung der Wellen flexibel und damit zur Überbrückung verschiedener Achsabstände geeignet ist und das bei der Anpassung an eine bestimmte Einbausituation nur wenig zusätzliche Bauteile erfordert.

Ausgehend von einem mehrgängigen Lastschaltgetriebe mit hydrodynamischem und mechanischem Leistungspfad der eingangs näher genannten Art erfolgt die Lösung dieser Aufgabe mit den im kennzeichnenden Teil des Patentanspruchs angegebenen Merkmalen.

Ein Lastschaltgetriebe ist mit hydrodynamischem und mechanischem Leistungspfad, insbesondere ein solches mehrgängiges Lastschaltgetriebe als Wendegetriebe für Baumaschinen vorgesehen. Mindestens eine Abtriebswelle und mehrere Vorgelegewellen mit auf diesen verteilten Losrädern, Festrädern und Schaltkupplungen bilden mehrere Vorgelegeeinheiten zur Gang- und Richtungsschaltung. Mindestens zwei Antriebswellen sind vorgesehen, wobei eine dieser Antriebswellen mit einem Turbinenabschnitt eines Drehmomentwandlers verbunden ist und zu dem hydrodynamischem Leistungspfad gehört und eine zweite Antriebswelle über den direkten Durchtrieb mit der Drehzahl eines Motors verbunden ist und zu dem mechanischem Leistungspfad gehört. Eine Vorgelegeeinheit K4 ist als mechanische Bereichsgruppe ausgebildet, die durch Vorgelegeeinheiten K1, K2, K3 aufgesplittet ist. Gemäß der Erfindung ist die Übersetzung des höchsten Gangs des hydrodynamischen Bereichs (dritter Gang = KV + K3) gleich der Übersetzung des niedrigsten Gangs des mechanischen Bereichs (vierter Gang = K4 + K1), so dass beim Bereichswechsel trotz des Doppelkupplungswechsels die Kupplungsansteuerung vereinfacht und optimale Schaltqualität gewährleistet ist. Mit dem erfindungsgemäßen Lastschaltgetriebe ist bei reduzierter Teilezahl und damit reduziertem konstruktiven Aufwand die Flexibilität der Gangübersetzungen verbessert und die Gesamtübersetzung höher gegenüber dem genannten Stand der Technik.

Gemäß einer bevorzugten Ausgestaltung der Erfindung ist während des Betriebs der Vorgelegeeinheit K4 der Turbinenabschnitt des Drehmomentwandlers von der Abtriebswelle getrennt, so daß Verluste aus dem Drehmomentwandler vermieden werden und der Wirkungsgrad des erfindungsgemäßen Lastschaltgetriebes verbessert ist.

Gemäß einer bevorzugten Ausführungsform der Erfindung weist das Lastschaltgetriebe koaxial zu den Antriebswellen einen Nebenabtrieb, beispielsweise einen PTO, auf. Vorzugsweise wird ein motorabhängiger Nebenabtrieb verwendet.

Die einzelnen Wellen des erfindungsgemäßen Lastschaltgetriebes sind zu einer Wendegetriebeeinheit KV, KR, K4 und einer Ganggetriebeeinheit K1, K2, K3 zusammengefasst, wobei die Wendegetriebeeinheit an einer beliebigen Seite der Antriebswelle vorgesehen ist und die Ganggetriebeeinheit an die Wendegetriebeeinheit anschließt, sodass die Wendegetriebeeinheit und die Gangetriebeeinheit bezogen auf die Antriebswelle hintereinander auf einer Seite der Abtriebswelle angeordnet sind. Die Gangetriebeeinheit schließt vorzugsweise an die Vorgelegeeinheit des Rückwärtsdgangs an.

Die flexible Anordnung der Wellen kann erreicht werden, ohne die am Kraftfluß beteiligten Komponenten austauschen zu müssen. Somit ist ein Höchstmaß an Wiederverwendbarkeit von Komponenten gewährleistet.

Für Fahrzeuge, die von dem Getriebe die Überbrückung großer Distanzen verlangen, kann eine lange Abstandsvariante vorgesehen werden, wie sie z. B. mit einem Achsverteilergetriebe verwirklicht werden kann.

In einer weiteren bevorzugten Ausführungsform der Erfindung ist die Vorgelegeeinheit des vierten Gangs unabhängig von den übrigen Vorgelegeeinheiten neben den Antriebswellen angeordnet. Diese Vorgelegeeinheit kann bei Bedarf auch aus dem erfindungsgemäßen Lastschaltgetriebe eliminiert werden. Ein derartiger Getriebeaufbau ist beispielsweise für Gabelstapler denkbar, die in der Regel nur über drei verschiedene Gänge verfügen. Das Getriebe wird dann nur über den hydrodynamischen Leistungspfad angetrieben. Der durch die herausgenommene Vorgelegeeinheit gewonnene Platz kann für einen weiteren Nebenabtrieb genutzt werden.

Durch die vorliegende Erfindung ist es demnach möglich, auf verschiedenste Getriebeanforderungen einzugehen und dabei das Grundgetriebekonzept beizubehalten. Durch die Standardisierung und den einfachen Aufbau können Material und Kosten gespart werden. Wartung und Instandhaltung werden aufgrund der Standardisierung ebenfalls einfacher.

Im folgenden wird ein bevorzugtes Ausführungsbeispiel der Erfindung anhand einer Zeichnung näher erläutert.

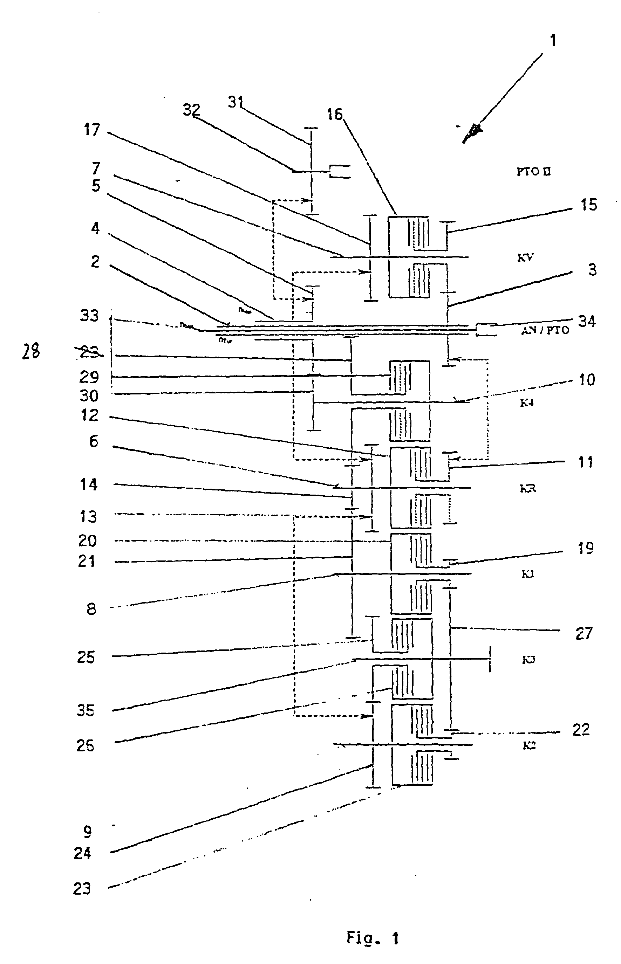

Die einzige Figur zeigt ein Getriebeschema eines mehrgängigen Lastschaltgetriebes mit hydrodynamischem und mechanischem Leistungspfad gemäß der vorliegenden Erfindung.

Ein mehrgängiges Lastschaltgetriebe 1 weist als Antriebswellen eine innere Hohlwelle 2 mit einem Festrad 3 und eine äußere Hohlwelle 4 mit einem Festrad 5 auf. Die innere Hohlwelle 2 wird von einem Turbinenabschnitt eines Drehmomentwandlers (nicht dargestellt) angetrieben und gehört zu einem hydrodynamischem Leistungspfad und die äußere Hohlwelle 4 wird über den direkten Durchtrieb mit der Drehzahl eines Motors (nicht dargestellt) angetrieben und gehört zu einem mechanischem Leistungspfad.

Das Lastschaltgetriebe 1 weist Vorgelegewellen 6, 7, 8, 9 und 10 auf, auf denen jeweils Festräder, Losräder und Kupplungselemente angeordnet sind und mit diesen mehreren Vorgelegeeinheiten bilden. Die Vorgelegeeinheit für den Rückwärtsgang KR wird durch die Vorgelegewelle 6, das Losrad 11, das Kupplungselement 12 und die Festräder 13 und 14 gebildet. Die Vorgelegeeinheit für den Vorwärtsgang KV wird durch die Vorgelegewelle 7, das Losrad 15, das Kupplungselement 16 und das Festrad 17 gebildet. Die Vorgelegeeinheit für den ersten Gang K1 wird durch die Vorgelegewelle 8, das Losrad 19, das Kupplungselement 20 und das Festrad 21 gebildet. Die Vorgelegeeinheit für den zweiten Gang K2 wird durch die Vorgelegewelle 9, das Losrad 22, das Kupplungselement 23 und das Festrad 24 gebildet. Die Vorgelegeeinheit für den dritten Gang K3 wird durch die Abtriebswelle 35, das Losrad 25, das Kupplungselement 26 und das Festrad 27 gebildet. Die Vorgelegeeinheit für den vierten Gang K4 wird durch die Vorgelegewelle 10, das Losrad 28, das Kupplungselement 29 und das Festrad 30 gebildet. Die Vorgelegewelle 10 ist bevorzugt neben den inneren und äußeren Hohlwellen 2, 4 gelegen, so dass das Festrad 5 mit dem Festrad 30 kämmt.

Vorzugsweise wird von der äußeren Hohlwelle 4 ein weiteres Festrad 31 eines Nebenabtriebs 32 zu einem PTO beaufschlagt, der weit vorn am Getriebe angeordnet ist, damit eine für das Fahrzeug oder das Getriebe erforderliche Hydraulikpumpe (nicht dargestellt) parallel zum Getriebe angeordnet werden kann. Damit wird der nötige Einbauraum für das Getriebe reduziert, indem die axiale Baulänge auf ein minimales Maß sinkt. Ebenfalls vom direkten Durchtrieb wird eine Zentralwelle 33 zu einem weiteren Nebenabtrieb 34 eines optimalen, zusätzlichen PTO angetrieben.

Die Funktionsweise der Zahnräder und Kupplungen zum Schalten der unterschiedlichen Gänge und der entsprechenden Kraftfluß sind dem Fachmann aus der Darstellung in der Figur ohne weiteres verständlich. Daher soll hier nicht weiter darauf eingegangen werden.

Beim Leistungsfluss über den hydrodynamischen Leistungspfad wird die Bereichsgruppe KV durch die Vorgelegeeinheiten K1, K2, K3 aufgesplittet (Gang 1V, 2V, 3V). Entsprechend wird die Bereichsgruppe K4 beim Leistungsfluss über den mechanischen Leistungspfad durch die Vorgelegeeinheiten K1, K2, K3 aufgesplittet (Gang 4V, 5V, 6V). Die Rückwärtsgänge werden über die Bereichsgruppe KR nur über den hydrodynamischen Leistungspfad angetrieben. Der Turbinenabschnitt des Drehmomentwandlers ist beim Betrieb über den mechanischen Leistungspfad nicht mit dem Abtrieb 35 verbunden.

Den einzelnen Gängen sind folgende Kupplungen zu schalten:

| | Kupplungen | |
|---|---|---|
| erster Gang vorwärts: | 16, 20 | KV, K1 |
| zweiter Gang vorwärts: | 16, 23 | KV, K2 |
| dritter Gang vorwärts: | 16, 26 | KV, K3 |
| vierter Gang vorwärts: | 29, 20 | K4, K1 |
| fünfter Gang vorwärts: | 29, 23 | K4, K2 |
| sechster Gang vorwärts: | 29, 26 | K4, K3 |
| Rückwärtsgang | 12, 20 | KR, K1 |
| | oder 23 | oder K2 |
| | oder 26 | oder K3 |

Beim Übergang vom dritten Gang vorwärts zum vierten Gang vorwärts erfolgt vorzugsweise keine Übersetzungsänderung, wobei dann bei fünf Vorwärtsgängen Vorteile beim Synchronisieren des Bereichswechsels hydrodynamischer - mechanischer Leistungspfad gewonnen werden können.

Die Vorgelegeeinheiten KV, KR und K4 bilden eine Wendegetriebeeinheit und die Vorgelegeeinheiten K1, K2 und K3 bilden eine Ganggetriebeeinheit, wobei die Vorgelegeeinheiten der Wendegetriebeeinheit an einer Seite neben den Antriebswellen 2, 4 vorgesehen sind und die Vorgelegeeinheiten der Ganggetriebeeinheit an die Vorgelegeeinheit KR des Rückwärtsgangs anschließen.

### Bezugszeichen

- 1: Lastschaltgetriebe
- 2: Antriebswelle
- 3: Festrad
- 4: Antriebswelle
- 5: Festrad
- 6: Vorgelegewelle
- 7: Vorgelegewelle
- 8: Vorgelegewelle
- 9: Vorgelegewelle
- 10: Vorgelegewelle
- 11: Losrad
- 12: Kupplungselement
- 13: Festrad
- 14: Festrad
- 15: Losrad
- 16: Kupplungselement
- 17: Festrad
- 19: Losrad
- 20: Kupplungselement
- 21: Festrad
- 22: Losrad
- 23: Kupplungselement
- 24: Festrad
- 25: Losrad
- 26: Kupplungselement
- 27: Festrad
- 28: Losrad
- 29: Kupplungselement
- 30: Festrad
- 31: Festrad
- 32: Nebenantrieb
- 33: Zentralwelle
- 33: Nebenabtrieb
- 34: Abtriebswelle

- KV: Vorgelegeeinheit Vorwärtsgang
- KR: Vorgelegeeinheit Rückwärtsgang
- K1: Vorgelegeeinheit erster Gang
- K2: Vorgelegeeinheit zweiter Gang
- K3: Vorgelegeeinheit dritter Gang
- K4: Vorgelegeeinheit mechanische Bereichsgruppe
- AN: Antriebswelle

## Patentansprüche

1. Lastschaltgetriebe (1) mit hydrodynamischem und mechanischem Leistungspfad, insbesondere ein solches mehrgängiges Lastschaltgetriebe als Wendegetriebe für Baumaschinen, mit mindestens einer Abtriebswelle (35) und mehreren Vorgelegewellen (6, 7, 8, 9 und 10) mit auf diesen verteilten Losrädern, Festrädern und Schaltkupplungen, die mehrere Vorgelegeeinheiten (KR, KV, K1, K2, K3, K4) zur Gang- und Richtungsschaltung bilden, und mindestens zwei Antriebswellen (2, 4), wobei eine dieser Antriebswellen (2) mit einem Turbinenabschnitt eines Drehmomentwandlers verbunden ist und einen hydrodynamischen Bereich bildet, und eine zweite Antriebswelle (4) über den direkten Durchtrieb mit der Drehzahl eines Motors verbunden ist und einen mechanischen Bereich bildet, wobei eine erste Vorgelegeeinheit (K4) als mechanische Bereichsgruppe ausgebildet ist, die durch weitere Vorgelegeeinheiten (K1, K2, K3) aufgesplittet ist, **dadurch gekennzeichnet, dass** die Übersetzung des höchsten Gangs des hydrodynamischen Bereichs (dritter Gang = KV + K3) gleich der Übersetzung des niedrigsten Gangs des mechanischen Bereichs (vierter Gang = K4 + K1) ist.

2. Lastschaltgetriebe (1) gemäß Anspruch 1, **dadurch gekennzeichnet, dass** während des Betriebs der erste Vorgelegeeinheit (K4) der Turbinenabschnitt des Drehmomentwandlers von der Abtriebswelle (35) getrennt ist.

3. Lastschaltgetriebe (1) gemäß Anspruch 1, **dadurch gekennzeichnet, dass** koaxial zu den Antriebswellen (2, 4) ein Nebenabtrieb (34), beispielsweise ein PTO, vorgesehen ist.

4. Lastschaltgetriebe (1) gemäß Anspruch 1, **dadurch gekennzeichnet, dass** die einzelnen Wellen zu einer Wendegetriebeeinheit (KV, KR, K4} und einer Ganggetriebeeinheit (K1, K2, K3) zusammengefasst sind, wobei die Wendegetriebeeinheit an einer beliebigen Seite der Antriebswellen (2, 4) vorgesehen ist und die Ganggetriebeeinheit an die Wendegetriebeeinheit anschließt, so dass die Wendegetriebeeinheit und die Ganggetriebeeinheit, bezogen auf die Antriebswellen (2, 4), hintereinander auf einer Seite der Antriebswellen angeordnet sind.

5. Lastschaltgetriebe (1) nach einem der vorhergehenden Ansprüche, **dadurch gekennzeichnet, dass** an die Abtriebswelle (35) ein Achsverteilergetriebe anschließbar ist.

6. Lastschaltgetriebe (1) nach einem der vorhergehenden Ansprüche, **dadurch gekennzeichnet, dass** die Vorgelegeeinheit des vierten Gangs (K4) unabhängig von den übrigen Vorgelegeeinheiten neben den Antriebswellen (2, 4) angeordnet ist.

7. Lastschaltgetriebe (1) nach einem der vorhergehenden Ansprüche, **dadurch gekennzeichnet, dass** die Vorgelegeeinheit des vierten Gangs (K4) ohne weitere Veränderungen aus dem Lastschaltbargetriebe (1) herausnehmbar ist.

8. Lastschaltgetriebe (1) nach einem der vorhergehenden Ansprüche, **dadurch gekennzeichnet, dass** parallel neben der Antriebswelle (2, *4)* ein Nebenabtrieb (32) angeordnet ist.

9. Lastschaltgetriebe (1) nach Anspruch 8, **dadurch gekennzeichnet, dass** der Nebenantrieb (32) motorabhängig ist.

10. Lastschaltgetriebe (1) nach einem der vorhergehenden Ansprüche, **dadurch gekennzeichnet, dass** an Stelle der Vorgelegeeinheit des vierten Gangs (K4) ein Nebenabtrieb vorsehbar ist.

## Claims

1. Powershift transmission (1) with hydrodynamic and mechanical power path, in particular such a multi-speed powershift transmission as a reversing transmission for construction machinery, having at least one output shaft (35) and a plurality of layshafts (6, 7, 8, 9 and 10) with idler gears, fixed gears and shift clutches distributed thereon, which form a plurality of layshaft units (KR, KV, K1, K2, K3, K4) for gear- and direction selection, and at least two input shafts (2, 4), wherein one of said input shafts (2) is connected to a turbine portion of a torque converter and forms a hydrodynamic range, and a second input shaft (4) is connected by the direct through-drive to the rotational speed of an engine and forms a mechanical range, wherein a first layshaft unit (K4) is designed as a mechanical range group, which is split up by means of further layshaft units (K1, K2, K3), **characterized in that** the ratio of the highest gear of the hydrodynamic range (third gear = KV + K3) is identical to the ratio of the lowest gear of the mechanical range (fourth gear = K4 + K1).

2. Powershift transmission (1) according to claim 1, **characterized in that** during operation of the first layshaft unit (K4) the turbine portion of the torque converter is separate from the output shaft (35).

3. Powershift transmission (1) according to claim 1, **characterized in that** coaxially with the input shafts (2, 4) an auxiliary output (34), for example a PTO, is provided.

4. Powershift transmission (1) according to claim 1, **characterized in that** the individual shafts are combined into a reversing transmission unit (KV, KR, K4) and a gear transmission unit (K1, K2, K3), wherein the reversing transmission unit is provided at any desired side of the input shafts (2, 4) and the gear transmission unit adjoins the reversing transmission unit, so that the reversing transmission unit and the gear transmission unit are disposed, in relation to the input shafts (2, 4), one downstream of the other at one side of the input shafts.

5. Powershift transmission (1) according to one of the preceding claims, **characterized in that** a power divider transmission is connectable to the output shaft (35).

6. Powershift transmission (1) according to one of the preceding claims, **characterized in that** the layshaft unit of fourth gear (K4) is disposed independently of the other layshaft units alongside the input shafts (2, 4).

7. Powershift transmission (1) according to one of the preceding claims, **characterized in that** the layshaft unit of fourth gear (K4) is removable from the powershift transmission (1) without further modifications.

8. Powershift transmission (1) according to one of the preceding claims, **characterized in that** one auxiliary output (32) is disposed parallel alongside the input shaft (2, 4).

9. Powershift transmission (1) according to claim 8, **characterized in that** the auxiliary input (32) is engine -dependent.

10. Powershift transmission (1) according to one of the preceding claims, **characterized in that** an auxiliary output may be provided instead of the layshaft unit of fourth gear (K4).

## Revendications

1. Transmission à changement de vitesse en charge (1) comprenant des chemins de transmission de puissance hydrodynamique et mécanique, en particulier une telle transmission à changement de vitesse en charge à plusieurs vitesses utilisée comme transmission réversible pour engins de travaux publics, comprenant au moins un arbre de sortie (35) et plusieurs arbres intermédiaires (6, 7, 8, 9 et 10) portant des pignons fous, des pignons fixes et des embrayages de commande répartis sur eux et qui forment des unités intermédiaires (KR, KV, K1, K2, K3, K4) pour les changements de vitesse et de sens de marche, et au moins deux arbres d'entrée (2, 4), dans laquelle un de ces arbres d'entrée (2) est relié à une section turbine d'un convertisseur de couple et forme une zone hydrodynamique, et un deuxième arbre d'entrée (4) est relié à la vitesse de rotation du moteur par l'intermédiaire d'une prise directe et forme une zone mécanique, et dans laquelle une première unité intermédiaire (K4) est réalisée sous la forme d'un groupe de zone mécanique qui est subdivisé par d'autres unités intermédiaires (K1, K2, K3), **caractérisée en ce que** le rapport de transmission de la plus grande vitesse de la zone hydrodynamique (troisième vitesse = KV + K3) est égal au rapport de transmission de la plus petite vitesse de la zone mécanique (quatrième vitesse = K4 + K1).

2. Transmission à changement de vitesse en charge (1) selon la revendication 1, **caractérisée en ce que**, pendant le fonctionnement de la première unité intermédiaire (K4), la section turbine du convertisseur de couple est séparée de l'arbre de sortie (35).

3. Transmission à changement de vitesse en charge (1) selon la revendication 1, **caractérisée en ce qu'**une sortie annexe (34), par exemple une prise de force, est prévue coaxialement aux arbres d'entrée (2, 4).

4. Transmission à changement de vitesse en charge (1) selon la revendication 1, **caractérisée en ce que** les différents arbres sont regroupés en une unité de transmission réversible (KV, KR, K4) et une unité de transmission à plusieurs vitesse (K1, K2, K3), l'unité de transmission réversible étant prévue sur un côté quelconque des arbres d'entrée (2, 4) et l'unité de transmission à plusieurs vitesses faisant suite à l'unité de transmission réversible, de sorte que, par rapport aux arbres d'entrée (2, 4), l'unité de transmission réversible et l'unité de transmission à plusieurs vitesses sont disposées l'une derrière l'autre sur un côté des arbres d'entrée.

5. Transmission à changement de vitesse en charge (1) selon l'une des revendications précédentes, **caractérisée en ce qu'**une boîte de répartition entre arbres peut être raccordée à l'arbre de sortie (35).

6. Transmission à changement de vitesse en charge (1) selon l'une des revendications précédentes, **caractérisée en ce que** l'unité intermédiaire de la quatrième vitesse (K4) est disposée à côté des arbres d'entrée (2, 4) indépendamment des autres unités intermédiaires.

7. Transmission à changement de vitesse en charge (1) selon l'une des revendications précédentes, **caractérisée en ce que** l'unité intermédiaire de la quatrième vitesse (K4) peut être enlevée de la transmission à changement de vitesse en charge (1) sans autres modifications.

8. Transmission à changement de vitesse en charge (1) selon l'une des revendications précédentes, **caractérisée en ce qu'**une sortie annexe (32) est disposée parallèlement à côté de l'arbre d'entrée (2, 4).

9. Transmission à changement de vitesse en charge (1) selon la revendication 8, **caractérisée en ce que** la sortie annexe (32) est dépendante du moteur.

10. Transmission à changement de vitesse en charge (1) selon l'une des revendications précédentes, **caractérisée en ce qu'**une sortie annexe peut être prévue à la place de l'unité intermédiaire de la quatrième vitesse (K4).
